# EUROPEAN PATENT SPECIFICATION

(11) **EP 1 789 155 B1**
(45) Date of publication and mention of the grant of the patent: **16.03.2011**
(21) Application number: 05796066.8
(22) Date of filing: 15.09.2005
(51) Int. Cl.: B01D 53/04, B01D 53/26, B65D 75/12, B65D 75/44

(54) **DESICCANT BAG WITH ORIENTATION INDICATOR**
TROCKENMITTELBEUTEL MIT AUSRICHTUNGSANZEIGER
SAC DESHYDRATEUR AVEC INDICATEUR D'ORIENTATION

(30) Priority: 17.09.2004 US 611098 P
(43) Date of publication of application: 30.05.2007
(73) Proprietor: Flow Dry Technology, Inc, Washington, DC 20006 (US)
(72) Inventor: PERRINE, Glenn, D., Lewisburg, OH 45338 (US)
(74) Representative: Wilson, Alan Stuart
(86) International application number: PCT/US2005/032651
(87) International publication number: WO 2006/033904

(56) References cited:
- EP-A- 1 201 551
- US-A- 3 990 872
- US-A- 4 364 474
- US-A- 6 155 072
- US-A1- 2003 213 543

## Description

### FIELD OF INVENTION

The present invention relates to an improved adsorbent package having an integrated identification / orientation marker disposed on both ends of the package.

### BACKGROUND OF THE INVENTION

Adsorbent packages are used in the receiver of a refrigerant system for the purpose of adsorbing moisture and other undesirable substances from the refrigerant. An exemplary adsorbent containing package provided for this purpose is shown and described in the present inventor's prior U.S. Patent 6,835,257.
It is desirable to provide distinguishing marks on the adsorbent package to allow orientation and/or identification of the part to assure that the bag is properly placed into the assembly. In the past, witness marks, ink marks, or marks using other materials have been used to provide the distinguishing orientation indicators on the desiccant package. However, these methods are not entirely satisfactory due to the increased cost of the extra labor and/or manufacturing operations required, and because such methods could introduce unknown contaminants into the refrigerant system. It is with overcoming the foregoing deficiencies in a simple and expedient manner that the present invention is concerned.

### SUMMARY OF THE INVENTION

The adsorbent material package of the present invention comprises an elongated pouch adapted for filling with desiccant or other adsorbent medium therein. The adsorbent package is typically formed of a porous, non-woven, material such as a spun bonded nylon material, spun bounded polyester material, or polyester felt. In accordance with the present invention, a distinguishing orientation / identification indicator is integrally formed on both of the sealed longitudinal ends of the adsorbent package. These distinguishing marks may be configured in the shape of a notch, a 'V', a 'W', a half-square, a half-circle, or a variety of other shapes. In one exemplary embodiment, the indicator takes the form of a protruding half-circle area on one end of the bag, and an indented half-circle area on the other end of the bag. In accordance with the present invention, the distinguishing indicator mark is integrally formed on both ends of the adsorbent package by way of the same tooling used to cut-off the ends of the bag.

### BRIEF DESCRIPTION OF THE DRAWINGS

Fig. 1 is a perspective view of an adsorbent package illustrating an exemplary orientation indicator having a protruding area on one end of the package and an indented area on the other end of the package;

Fig. 2 is a perspective view of an exemplary cut-off tool used to form the longitudinal ends of an adsorbent package, wherein the shape of an exemplary orientation indicator is integrally formed therein;

### DETAILED DESCRIPTION OF EXEMPLARY EMBODIMENTS

Exemplary embodiments illustrating the orientation indicators of the present invention will be described with reference to the accompanying drawings. As used herein, the term "orientation indicator" is used interchangeably between the various exemplary embodiments of the present invention to describe the distinguishing identification markers integrally formed on both ends of an adsorbent package. As described more fully below, the orientation indicators may be used to identify the position of the bag for insertion into the mating assembly of a refrigerant system (not shown), and to identify the part number of the bag. The orientation indicators may also be used to identify the location of tracer dye, specific desiccant, or other components inside the adsorbent containing package.

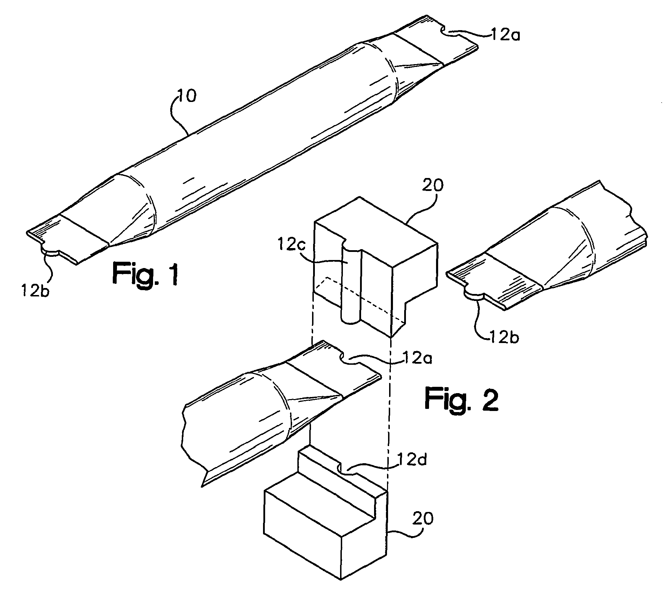

Turning to Fig. 1, there is illustrated an exemplary adsorbent package 10 comprising orientation indicators 12a, 12b integrally formed on the sealed longitudinal ends of the desiccant bag 10. On the right hand end of the bag 10, it is apparent the orientation indicator 12a is configured into the shape of an indented half-circle area, while on the left hand end of the bag 10, the orientation indicator 12b is configured into the shape of a protruding half-circle area. Although the orientation indicators of Fig. 1 are configured in the form of a pair of indented and protruding half-circle areas, it is understood that many other shapes and configurations may be used on both of the sealed longitudinal ends of the package without departing from the scope of the present invention.

As described in U.S. Pat. No. 6,835,257, the sealed longitudinal ends of the adsorbent package may be formed via conventional means such as heat sealing, ultrasonic welding, sewing, or other electronic sealing or fusing means. To form the adsorbent package, the bottom portion of the porous bag material is sealed via heat seal, ultrasonic welding, sewing, or other electronic sealing system to form a pouch. Then, the desired desiccant is filled into the pouch. The top longitudinal edge of the packet is fused together to provide alternating hard sealed and relief areas. At the same time, the bottom half of the next succeeding bag in the production run is sealed and the procedure repeated so that successive bags can be made. In this way, the bags are successively sealed together in a strip before they are die-cut apart.

Fig. 2 illustrates a cut-off tool 20 for cutting the ends of each package 10 after the longitudinal ends have been sealed. As shown in Fig. 2, the cut-off tool 20 is a standard male-female punch die set used for cutting the bags apart. In accordance with the present invention, the tool 20 may be adapted to provide integrally formed male-female cut-out regions 12c, 12d for shaping the orientation indicators 12a, 12b (Fig. 1) into the ends of the bag 10 during the cut-off operation. Although the cut-out regions 12c, 12d of Fig. 2 are configured in the shape of a half-circle, those skilled in the art will appreciate that many other shapes, configurations, or multiplicities of shapes may be used without departing from the scope of the present invention.

By allowing the orientation indicator to be built into the cut-off tooling 20 for the adsorbent package 10, a separate manual operation is not required, thereby reducing labor and manufacturing costs and minimizing the opportunity for mistakes to be made during the identification and/or marking operation. Since the configuration of the orientation indicator is built into the same tooling 20 used to shape the ends of the package 10, the indicator will always be present during production of the part. This eliminates the need for a costly second operation, and reduces the chance that a mistake will be made in the identification of the part so long as the correct tooling is selected to cut-off the ends of the package 10.

As described herein, the orientation indicators of the present invention allow for proper orientation of the adsorbent package inside the condenser receiver of a refrigerant system. It is understood that the orientation indicator may be used to signify to the user that a tracer wafer is positioned at one end of the bag. A tracer dye wafer is commonly used to release dye into the refrigerant system and find leaks of refrigerant upon assembly of the entire air conditioning system or upon servicing. The tracer dye wafer is typically placed at one end of the adsorbent package to allow for the quickest possible adsorption into the refrigerant stream. As a result, the orientation indicator of the present invention may be used to show which end of the bag contains the tracer dye wafer and assures that the bag is placed properly into the assembly. The orientation indicator of the present invention may also be used to distinguish bags with different gram quantities or part numbers from one another. Also, the orientation indicator may be used to show that the product has received special inspection.

## Claims

1. An adsorbent containing package (10) comprising an elongated pouch having first and second sealed longitudinal ends, **characterized in that** said first sealed longitudinal end has a first orientation indicator (12b) cut therein and said second sealed longitudinal end has a second orientation indicator (12a) cut therein with said first orientation indicator (12b) comprising a protruding area and said second orientation indicator (12a) comprising an indented area therein.

2. Adsorbent containing package as recited in claim 1 wherein both said first orientation indicator and said second orientation indicator (12a, 12b) have half circle shapes.

3. A method of preparing an adsorbent containing package (10) comprising an elongated pouch, said method comprising the steps of:
(a) sealing first and second longitudinal ends of said package;
(b) providing tooling (20) to cut off said first and second ends;
(c) **characterized by** providing on said tooling (20), means (12c,12d) for forming an orientation indicator (12a,12b) along both said first and second longitudinal ends of said package; and
(d) cutting said ends with said tooling and forming said orientation indicators during said cutting by forming a protruding shaped orientation indicator (12b) on said first longitudinal end and an indented shaped orientation indicator (12a) on said second longitudinal end.

4. Method as recited in claim 3 wherein said protruding and said indented shaped orientation indicators (12a,12b) are both in the shape of a half circle.

## Patentansprüche

1. Verpackung (10), die ein Adsorptionsmittel enthält, die einen länglichen Beutel mit ersten und zweiten verschlossenen Längsenden aufweist, **dadurch gekennzeichnet, dass** das erste verschlossene Längsende einen ersten Ausrichtungsanzeiger (12b) hat, der darin ausgeschnitten ist, und das zweite verschlossene Längsende einen zweiten Ausrichtungsanzeiger (12a) darin ausgeschnitten hat, wobei der erste Ausrichtungsanzeiger (12b) einen vorstehenden Bereich aufweist, und der zweite Ausrichtungsanzeiger (12a) einen eingekerbten Bereich darin aufweist.

2. Verpackung, die ein Adsorptionsmittel enthält, nach Anspruch 1, wobei sowohl der erste Ausrichtungsanzeiger als auch der zweite Ausrichtungsanzeiger (12a, 12b) Halbkreisformen haben.

3. Verfahren zur Herstellung einer Verpackung (10), die ein Adsorptionsmittel enthält, die einen länglichen Beutel aufweist, wobei das Verfahren die folgenden Schritte aufweist:
(a) Verschließen der ersten und zweiten Längsenden der Verpackung;
(b) Bereitstellen der Werkzeuge (20), um die ersten und zweiten Enden abzuschneiden;
(c) **gekennzeichnet durch** die Bereitstellung von Einrichtungen (12c, 12d) auf den Werkzeugen (20), um einen Ausrichtungsanzeiger (12a, 12b) entlang sowohl der ersten als auch zweiten Längsenden der Verpackung auszubilden; und
(d) Schneiden der Enden mit den Werkzeugen und Ausbilden der Ausrichtungsanzeiger während des Schneidens, indem ein vorstehend geformter Ausrichtungsanzeiger (12b) auf dem ersten Längsende und ein eingekerbt geformter Ausrichtungsanzeiger (12a) auf dem zweiten Längsende ausgebildet werden.

4. Verfahren nach Anspruch 3, wobei die vorstehend und eingekerbt geformten Ausrichtungsanzeiger (12a, 12b) beide die Form eines Halbkreises haben.

## Revendications

1. Emballage (10) contenant un adsorbant, comprenant un sachet allongé, ayant des première et deuxième extrémité longitudinales scellées de manière étanche, **caractérisé en ce que** ladite première extrémité longitudinale scellée de manière étanche présente un premier indicateur d'orientation (12b) découpé en son sein, et ladite deuxième extrémité longitudinale scellée de manière étanche présente un deuxième indicateur d'orientation (12a) découpé en son sein, ledit premier indicateur d'orientation (12b) comprenant une zone en saillie et ledit deuxième indicateur d'orientation (12a) comprenant en son sein une zone dentelée.

2. Emballage contenant un adsorbant selon la revendication 1, dans lequel ledit premier indicateur d'orientation et ledit deuxième indicateur d'orientation (12a, 12b) ont tous deux des formes de demi-cercle.

3. Procédé de préparation d'un emballage (10) contenant un adsorbant, comprenant un sachet allongé, ledit procédé comprenant les étapes consistant à :
(a) sceller de manière étanche les première et deuxième extrémités longitudinales dudit emballage ;
(b) fournir un outillage (20) pour découper lesdites première et deuxième extrémités ;
(c) **caractérisé par** la fourniture, sur ledit outillage (20), de moyens (12c, 12d) pour former un indicateur d'orientation (12a, 12b) le long à la fois desdites première et deuxième extrémités longitudinales dudit emballage ; et
(d) découpage desdites extrémités avec ledit outillage et formation desdits indicateurs d'orientation durant le découpage, par formation d'un indicateur d'orientation (12b) en forme de saillie sur ladite première extrémité longitudinale et d'un indicateur d'orientation (12a) en forme de dentelure, sur ladite deuxième extrémité longitudinale.

4. Procédé selon la revendication 3, dans lequel lesdits indicateurs d'orientation en saillie et lesdits indicateurs d'orientation à forme dentelée (12a, 12b) ont tous les deux une forme en demi-cercle.
